# EUROPEAN PATENT SPECIFICATION

(11) **EP 3 050 771 B1**
(45) Date of publication and mention of the grant of the patent: **03.04.2019**
(21) Application number: 16152481.4
(22) Date of filing: 22.01.2016
(51) Int. Cl.: B60W 50/14, B60W 40/09

(54) **INFORMATION PROVISION METHOD, INFORMATION PROVISION DEVICE AND VEHICLE**
INFORMATIONSBEREITSTELLUNGSVERFAHREN, INFORMATIONSBEREITSTELLUNGSVORRICHTUNG UND FAHRZEUG
PROCÉDÉ DE FOURNITURE D'INFORMATIONS, DISPOSITIF DE FOURNITURE D'INFORMATIONS ET VÉHICULE

(30) Priority: 30.01.2015 JP 2015017755
(43) Date of publication of application: 03.08.2016
(73) Proprietor: FUJITSU TEN LIMITED, Kobe-shi Hyogo 652-8510 (JP)
(72) Inventor: ICHIOKA, Hironori, Kobe-shi, Hyogo 652-8510 (JP); TANAKA, Shinichi, Kobe-shi, Hyogo 652-8510 (JP); RIDHZUAN BIN AWANG, Muhammad, Kobe-shi, Hyogo 652-8510 (JP); HORITA, Shunsuke, Kobe-shi, Hyogo 652-8510 (JP)
(74) Representative: Haseltine Lake LLP

(56) References cited:
- EP-A1- 2 328 133
- EP-A2- 2 982 565
- WO-A1-03/039914
- WO-A1-2015/151243
- DE-A1-102011 082 480

## Description

### FIELD

The invention is directed to an information provision method, an information provision device, and a vehicle.

### BACKGROUND

Conventionally, automated driving and similar vehicle control in which driving operation is autonomously controlled by a vehicle such as an automobile are well known in the art. Such automated driving, which is conducted by a control device of the vehicle regardless of human driver's intention, is prone to make the vehicle behave unpredictably to the human driver when there are differences between automated driving and human driver's driving.

Allowing for such a point of view, a technical solution has been proposed which is capable of notifying occupants including a human driver of information on automated driving of the vehicle. For instance, Japanese Laid-open Patent Publication No. 2005-199875 discloses a technical solution capable of letting occupants know particulars of behavioral variations of the vehicle before or after the behavior of the vehicle is actually varied by automated driving.

As to such a technical solution as disclosed in Japanese Laid-open Patent Publication No. 2005-199875, however, because the occupants including a human driver are informed of the particulars of behavioral variations of the vehicle by the automated driving even if they are as the occupants imagine, the occupants are so frequently informed of and thus are probably bothered. In some situation not limited to the aforementioned, the occupants are not properly notified of information on automated control including the particulars of the behavioral variations by the automated driving.

The present invention has been achieved in view of the above problems, and an object of the present invention is to provide an information provision method, an information provision device, an information provision system, and a vehicle, in which occupants in the vehicle of which driving operation is at least partially or totally controlled automatically can be properly notified of information on such automated control.

WO 03/039914 A1 discloses the preamble of claims 1 and 10 and describes an information system in a motor vehicle, comprising several information sources for outputting respectively associated information. The information to be outputted is produced and/or filtered according to the state of the driver and/or the behaviour of the driver. The state of the driver and/or the behaviour of the driver is determined according to the data of one or more drive or comfort systems of the motor vehicle.

### SUMMARY

According to the claimed invention, an information provision method is defined in claim 1.

According to an aspect of an embodiment, it is possible to provide an information provision method, an information provision device, and a vehicle, in which occupants in the vehicle of which driving operations are at least partially or totally controlled automatically can be properly notified of information on such automated control

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:
Fig. 1 is a diagram illustrating an information provision method by an information provision system according to an embodiment;
Fig. 2 is a diagram illustrating a configuration example of the information provision system according to the embodiment;
Fig. 3 is a diagram illustrating an example of an occupant property table;
Fig. 4 is a diagram illustrating an example of a layout of imaging units and notifying units;
Fig. 5 is a diagram illustrating an exemplary notice reference table corresponding to notice reference information;
Fig. 6 is a flowchart illustrating a sequence of a major process executed by the information provision system; and
Fig. 7 is a diagram illustrating an example of a process executed in Step S8 of Fig. 6 when the location is a freeway ramp and the scene is "separating/decelerating".

### DESCRIPTION OF EMBODIMENT

An embodiment of an information provision method, an information provision device, an information provision system, and a vehicle will be described in detail with reference to the accompanying drawings. The present invention is not intended to be limited to such an embodiment.

### 1. Information Provision Method

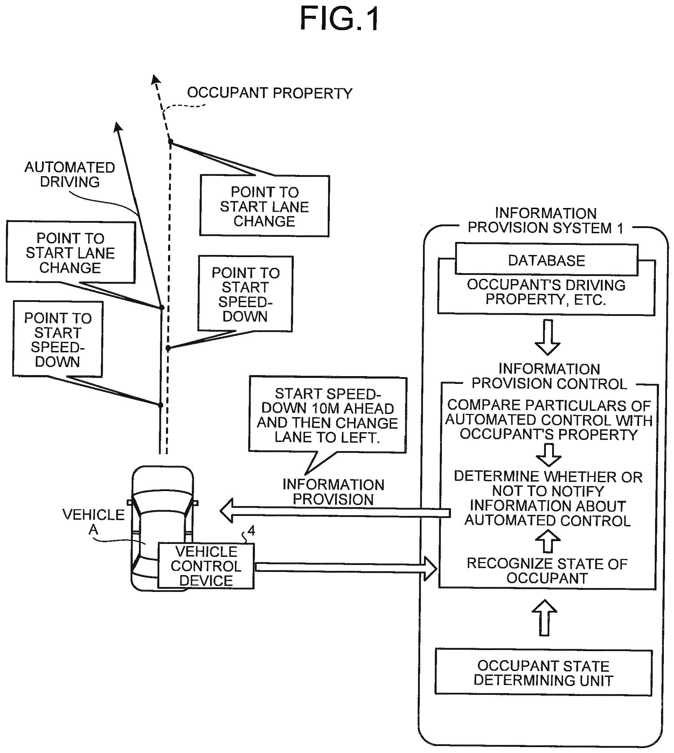

Fig. 1 is a diagram illustrating an information provision method executed by an information provision system 1 according to an embodiment. The information provision system 1 has its part loaded as an attachment device to a vehicle like an automobile and its remaining part positioned as a server outside the vehicle. Alternatively, all the parts may be loaded on the vehicle or anywhere external to the vehicle.

The information provision system 1 according to the embodiment is capable of notifying occupants (e.g., a driver and his or her fellow occupant(s)) of information about automated control of a vehicle A of which at least part or the whole of driving operation is automatically controlled based on a property and/or a state of the occupant, before or after actually varying the behavior of the vehicle A under the automated control.

Information about the automated control includes information about the variations in behavior of the vehicle A that are to be executed next by a vehicle control device 4 and information about the variations in behavior of the vehicle A executed immediately before by the vehicle control device 4, and more specifically, information that the vehicle A is to decelerate and turn to the right when the vehicle A in the automated control operates itself to turn to the right in the next intersection. Hereinafter, information about the automated control may sometimes be referred to as 'control-at-notice information'. Also, hereinafter, a situation where at least part or the whole of the driving operation of the vehicle A is automatically controlled is sometimes referred to as 'automated driving' for the purpose of convenience, and such automated driving includes automated cruising where the vehicle keeps running at a constant speed preset.

The information provision system 1 stores information about the property of the occupant of the vehicle A (referred to as 'occupant property information' hereinafter) in a database. The occupant property information may include information about a property of occupant's driving operation (e.g., his or her own way of driving) and the like.

The information provision system 1 obtains automated control information from the vehicle control device 4 loaded on the vehicle A and compares the particulars of the automated control information with the property of the occupant stored in the database. The automated control information is information about the particulars of the automated control that are to be executed next by the vehicle control device 4, including the timing when to start deceleration, the extent of the deceleration, the timing when to turn a blinker on, the timing when to start steering control, the extent of such steering control, and so forth. The automated control information may be information about the particulars of the automated control executed immediately before by the vehicle control device 4.

The information provision system 1, based on the comparison results, determines process events (hereinafter, informing process events) like the one about whether or not to notify the occupants in the vehicle A of the control-at-notice information. Such informing process events include a notifying manner, a notifying timing, a notifying destination, and so on of the control-at-notice information, as well as presence or absence of notifying of the control-at-notice information. The notifying manner includes types of the manner in which the occupants are notified of the control-at-notice information (for example, screen display, sound output, by vibration transmission, and the like), and the notifying destination of the information may be an occupant to be notified or a notifying place according to the state of the occupant even though the occupant is the same.

The information provision system 1, in the event of notifying the occupants in the vehicle A of the control-at-notice information, performs notice control based upon the notifying manner, the notifying timing, and the notifying destination that are determined. A case will now be given on the assumption that the vehicle control device 4 detects a fallen object on the road ahead during the automated driving. In such a case, the vehicle control device 4, to avoid the fallen object, would vary behavior of the vehicle A as indicated by a solid arrow in Fig. 1, namely, deceleration, lane change, and the like.

The information provision system 1, based upon the occupant property information stored in the database, determines whether or not variations in behavior (see the solid arrow in Fig. 1) of the vehicle corresponding to the property of the occupant are similar to those in behavior of the vehicle A by the automated driving. The 'variations in behavior corresponding to the property of the occupant' refer to variations in behavior (e.g., the timing, the extent, and the like of deceleration, acceleration, lane change, or the like) of the vehicle A, which are caused by the driving operations (e.g., braking, turning on/off blinkers, steering, and the like) of the vehicle A that are performed by the occupants in the event of finding a fallen object on the road ahead.

When the variations in behavior corresponding to the property of the occupant are as much as the variations in behavior of the vehicle A by the automated driving, the information provision system 1 does not notify the occupants in the vehicle A of the particulars of the variations in behavior of the vehicle A. In this way, when the vehicle A varies its behavior as the occupants in vehicle A imagine, the occupants in vehicle A are not notified of the particulars of the variations in behavior of the vehicle A. Therefore, the occupants are not bothered, and thus, it can be avoided to annoy the occupants in the vehicle A.

Otherwise, when the variations in behavior corresponding to the property of the occupant are not as much as the variations in behavior of the vehicle A by the automated driving, the information provision system informs the occupants in vehicle A of the particulars of the variations in behavior of the vehicle A. Specifically, the information provision system notifies the occupants by display or by sound of the particulars like 'the vehicle is going to decelerate 10 meters ahead and then make a lane change to the left.'

In this way, when the behavioral variations of the vehicle A by the automated driving are not as imagined by the occupants in the vehicle A, the information provision system 1 can notify them of the particulars of the variations in behavior of the vehicle A before or after varying its behavior, so as to appropriately call the attention of the occupants in vehicle A.

Additionally, in the event that the automated control information is about the particulars of automated control that are to be executed next over the driving operations, the information provision system 1 notifies the occupants in the vehicle A of the particulars of the variations in behavior of the vehicle A before they happen, and this enables the occupants in the vehicle A to understand the particulars of the variations in behavior of the vehicle A.

Otherwise, in the event that the automated control information is about the particulars of the automated control of the driving operation that has been carried out immediately before, the information provision system 1 notifies the occupants in the vehicle A of the particulars of the variations in behavior of the vehicle A after they happen. In this way, the occupants in the vehicle A can understand the causes of the variations in behavior of the vehicle A after they happen.

Additionally, the information provision system 1 can determine the notifying manner, the notifying timing, and the notifying destination, based upon differences between the behavioral variations corresponding to the property of the occupant and those of the vehicle A by the automated driving, and this enables the occupants in the vehicle A to be notified further appropriately of the particulars of the variations in behavior of the vehicle A.

Any of the occupants in the vehicle A, being looking aside or dozing off, is prone to get in panic because they cannot recognize the situation on an occasion when the vehicle control device 4 causes the vehicle A to decelerate or change a lane in such a manner as mentioned above.

In such a case, the information provision system 1, for instance, makes an occupant state determining unit detect the state of the occupants in the vehicle A, and when any of them is detected as being looking aside or dozing off, the information provision system 1 notifies the occupant of the particulars of the variations in behavior of the vehicle A even if the variations in behavior corresponding to the property of occupant are as much as the variations in behavior of the vehicle A by the automated driving.

In this way, the information provision system 1 changes the control for determining the informing process events and notifying the occupants in the vehicle A of the information about the automated control on the basis of the property and/or the state of the occupant in the vehicle A. Therefore, the occupant in the vehicle A can appropriately be notified of the information about the automated control. The information provision system according to the present embodiment will be further described below.

### 2. Configuration and so on of Information Provision System

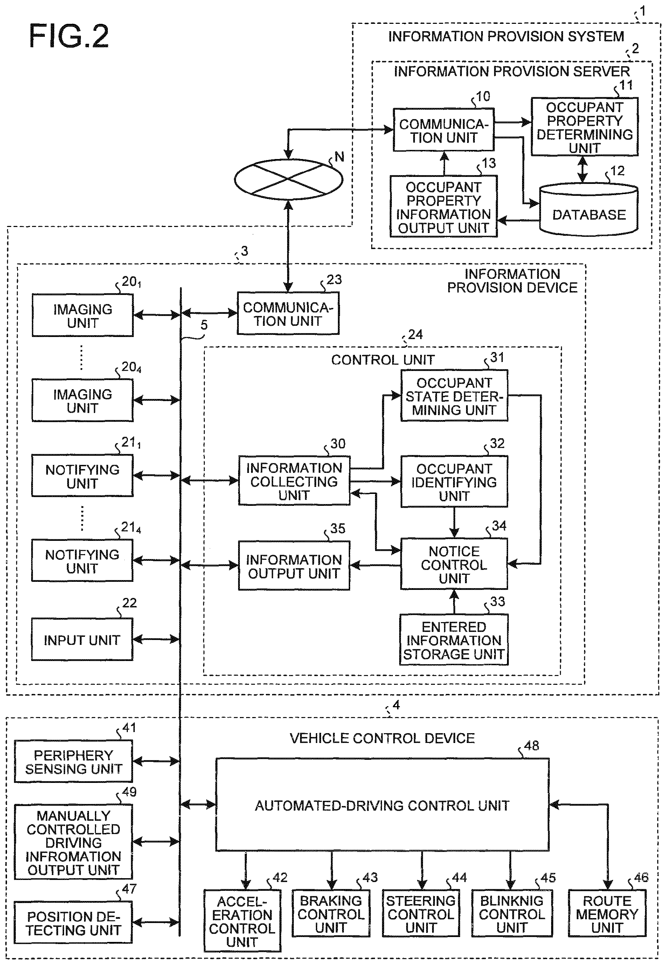

Fig. 2 is a diagram illustrating a configuration example of the information provision system 1. As shown in Fig. 2, the information provision system 1 includes an information provision server 2 and an information provision device 3. The information provision device 3 is loaded on the vehicle A and is capable of mutual communication with the information provision server 2 via communication network N.

### 2.1. Information Provision Server

The information provision server 2 includes a communication unit 10, an occupant property determining unit 11, a database 12, and an occupant property information output unit 13. The communication unit 10 communicates with the information provision device 3 by radio communication via the communication network N.

The communication unit 10 obtains manually controlled driving information via the communication network N from the information provision device 3 loaded on each of more than one vehicles including the vehicle A. The manually controlled driving information includes, for example, information on an occupant who currently drives the vehicle A, driving operations of the occupant, running locations and running routes, and so forth.

The manually controlled driving information obtained by the communication unit 10 is stored in the database 12. The information about driving operations of the occupant includes information of amount, time/date, and the like of accelerating, braking, steering, and turning on/off blinkers.

Based on the manually controlled driving information stored in the database 12, the occupant property determining unit 11 determines a property of driving operation (referred to as 'driving property' hereinafter) in the context of each of locations and/or scenes for each of occupants or each of occupant groups. Then, the occupant property determining unit 11 stores the results of such determination in an occupant property table of the database 12 as the aforementioned 'occupant property information.'

Grouping may be performed, for example, by setting a group of occupants whose driving properties are similar at least in part, a group of occupants that may ride together, and so on. Such setting can be dynamically performed by the occupant property determining unit 11, or otherwise, may be performed by an occupant himself or herself from the information provision device 3.

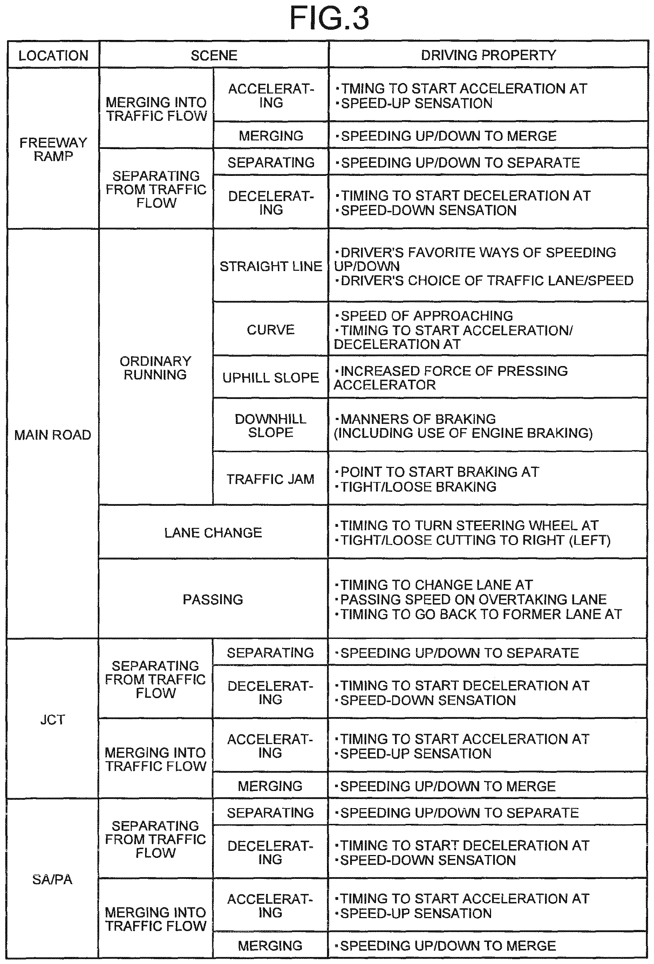

Fig. 3 is a diagram illustrating an example of the occupant property table. In the example in Fig. 3, the occupant property table contains information where 'location', 'scene', and 'driving property' are related to one another, and such a table is provided for each of the occupants or the occupant groups.

The occupant property table shown in Fig. 3 provides a case in which the running location is a freeway where the 'locations' include 'freeway ramp,' 'main road,' 'junction,' and 'service/parking area.'

The 'scenes' refers to running situations; that is, when the 'location' is 'freeway ramp,' they are 'merging/accelerating,' 'merging/merging,' 'separating/separating,' and 'separating/decelerating.' The scene of 'merging/accelerating' is associated with a driving situation of acceleration till entering the main road, and the scene of 'merging/merging' is associated with a driving situation upon entering the main road. The scene of 'separating/separating' is associated with a driving situation of separating from the main road, and the scene of 'separating/decelerating' is associated with a driving situation of decelerating after separating from the main road. These scenes are similarly applied to a case where the 'location' is a junction or a service/parking area.

When the 'location' is the main road, the 'scenes' include 'ordinary running/straight line,' 'ordinary running/curve,' 'ordinary running/uphill slope,' 'ordinary running/downhill slope,' 'ordinary running/traffic jam,' 'lane change,' and 'passing.'

The term 'ordinary running' is associated with ordinary running without lane change and passing, the 'straight line' is associated with straight running, the 'curve' is associated with curved running, the 'uphill slope' is associated with uphill running, the 'downhill slope' is associated with downhill running, and the 'traffic jam' is associated with traffic congestion in the main road.

The 'driving property' refers to a property of driving by the occupant in association with various 'locations' and 'scenes'. When they are 'freeway ramp' and 'merging/accelerating,' for instance, the 'driving properties' are the timing to start accelerating at and a speed-up sensation accompanying the actual acceleration; and when they are 'freeway ramp' and 'merging/merging', the 'driving properties' are speeding up/down (increasing/decreasing speed) upon merging into the traffic flow.

When they are 'main road' and 'ordinary running/straight line', the 'driving properties' are driver's favorite ways of speeding up/down, and the running location, the running speed, and/or the like. When they are 'main road' and 'ordinary running/curve', the 'driving properties' are the timing to turn the steering wheel at and the slow/fast tempo of steering. The expression of timing to turn the steering wheel at refers to the timing at which the traveling direction of the vehicle is changed by handling its steering wheel, and the expression of the slow/fast tempo of steering refers to the slow/fast tempo of handling of the steering wheel.

When they are 'main road' and 'ordinary running/traffic jam,' the 'driving properties' are the start location of braking and the slow/fast tempo of the braking. The expression of the start location of braking refers, for example, to a distance to the traffic-jammed place, and the expression of the slow/fast tempo of the braking refers to a way of the braking operation from the start location to the traffic-jammed place.

When the 'location' and the 'scene' are 'main road' and 'lane change,' the 'driving properties' are the timing to turn the steering wheel at and the slow/fast tempo of steering. When they are 'main road' and 'passing', the 'driving properties' are the timing to change a lane at, the passing speed on an overtaking lane, the timing to go back at to the former lane, and the like.

The occupant property table in Fig. 3 is given merely by way of example, and it may contain "driving properties' on any road but a freeway, which are provided in association with 'locations' and 'scenes'. For example, the occupant property table may include the 'driving properties' associated with 'location' and 'scene' that are respectively the driver's residence and parking.

The information provision server 2 is able to accumulate the occupant property information on each occupant, and thus, if he or she buys a new car, the occupant can effectively use the database 12.

### 2.2. Information Provision Device

The information provision device 3 includes a plurality of imaging units 20₁ to 20₄ (collectively referred to as 'imaging unit(s) 20' on some occasions hereinafter), a plurality of notifying units 21₁ to 21₄ (collectively referred to as 'notifying unit(s) 21' on some occasions hereinafter), an input unit 22, a communication unit 23, and a control unit 24, which are connected via a communication line 5 to be able to communicate with each other. The communication line 5 is, for example, a communication line for multiplex communication like CAN communication.

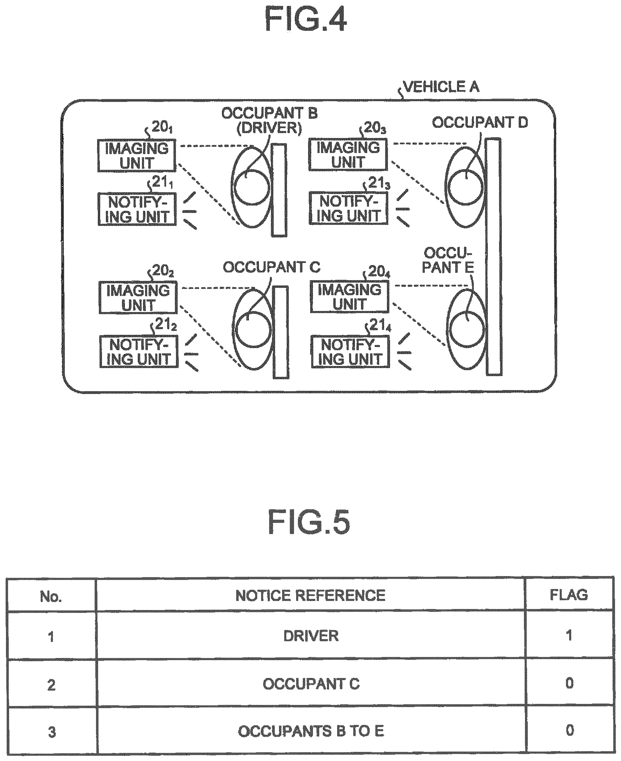

The imaging units 20₁ to 20₄ may include CMOS (Complementary Metal Oxide Semiconductor) sensors. The imaging units 20₁ to 20₄ are, as shown in Fig. 4 by way of example, provided corresponding to occupant seats placed within the vehicle A. Fig. 4 is a diagram illustrating an exemplary layout where the imaging units 20₁ to 20₄ and the notifying units 21₁ to 21₄ are arranged. The number of the occupant seats within the vehicle A is not limited to four, but there may be any number of the imaging units 20 and the notifying units 21, according to the number of the occupant seats.

With the imaging units 20 being arranged in this manner, it is possible to capture images of the occupants in the occupant seats within the vehicle A. The imaging units 20 forward data of the captured images (referred to as 'captured image data' hereinafter) to the control unit 24 via the communication line 5.

The notifying units 21₁ to 21₄ are informing means such as displays like an LCD (Liquid Crystal Display), speakers, oscillators, and the like. The notifying units 21₁ to 21₄ are arranged, as shown in Fig. 4, respectively corresponding to the occupant seats within the vehicle A.

With the notifying units 21 being arranged in this manner, the occupants in the occupant seats within the vehicle A can be notified of information by display or sound. The notifying units 21 receive information output from the control unit 24 via the communication line 5 and output the information on displays and/or from speakers.

The input unit 22 is, for example, provided with operation keys such as arrow keys, an enter key, and the like to enable input operations from the occupants in the vehicle A. The input unit 22 is, for example, located in the dashboard of the vehicle A. The communication unit 23 communicates by radio with the information provision server 2 via the communication network N.

The control unit 24 includes, for example, a microcomputer provided with a CPU (Central Processing Unit), a ROM (Read Only Memory), a RAM (Random Access Memory), input/output ports, and the like, and various types of circuitry. The CPU of such a micro-computer reads and executes programs stored in the ROM to achieve various types of control.

As shown in Fig. 2, the control unit 24 includes an information collecting unit 30, an occupant state determining unit 31, an occupant identifying unit 32, an entered information storage unit 33, a notice control unit 34, and an information output unit 35. Functions of these component units can be achieved when the CPU reads and executes the programs. At least a part or all of the component units can be made of hardware only.

The information collecting unit 30 obtains various types of information via the communication line 5. For instance, the information collecting unit 30 obtains captured image data from the imaging units 20₁ to 20₄ via the communication line 5, and further obtains occupant property information from the information provision server 2 via the communication network N and the communication line 5.

In addition, the information collecting unit 30 obtains automated control information via the communication line 5 from the vehicle control device 4 loaded on the vehicle A. Such automated control information contains, for example, information about the particulars of the automated control that are to be executed next or that have been executed immediately before.

The vehicle control device 4 will now be described. The vehicle control device 4 includes a periphery sensing unit 41, an acceleration control unit 42, a braking control unit 43, a steering control unit 44, a blinking control unit 45, a route memory unit 46, a position detecting unit 47, an automated-driving control unit 48, and a manually controlled driving info output unit 49.

The periphery sensing unit 41 senses the state of the periphery surrounding the vehicle A. For example, the periphery sensing unit 41 senses other vehicles and obstacles existing around the vehicle A, and also senses the state of running lanes and traffic lights. The periphery sensing unit 41 can obtain VICS™ (Vehicle information and Communication System) information to acquire information about traffic congestion and/or traffic control.

The acceleration control unit 42 controls the engine and motor of the vehicle A to cause the vehicle A to accelerate. The braking control unit 43 controls the brakes of the vehicle A to cause the vehicle A to decelerate. The steering control unit 44 controls the steering wheel of the vehicle A to control the running direction of the vehicle A. The blinking control unit 45 controls the blinkers (the winkers) of the vehicle A to turn them on or off.

The route memory unit 46 stores information about running routes by the automated driving. Such running routs by the automated driving are, for example, entered through an input operation on the input unit 22 by any occupant of the vehicle A. The position detecting unit 47 detects the current position (e.g., longitude and latitude) of the vehicle A.

Based upon the running route stored in the route memory unit 46, the state of the periphery sensed by the periphery sensing unit 41, the current running location detected by the position detecting unit 47, and the like, the automated-driving control unit 48 controls the acceleration control unit 42, the braking control unit 43, the steering control unit 44, and the blinking control unit 45.

The automated-driving control unit 48 can transmit, to the information provision device 3 via the communication line 5, information about the particulars of the automated control over the driving operations of the vehicle A by the automated-driving control unit 48, and information about the running locations and scenes, as the automated control information.

The particulars of the automated control includes, for example, the timing and amount of control over deceleration and acceleration, the timing and amount of control over steering, the timing of control over blinking, and the like, and these can be referred to as information about the driving properties by the automated driving. The information about variations in behavior of the vehicle A in the automated control is referred to as 'driving properties by the automated driving' hereinafter on some occasions.

Further again, the control unit 24 will now be explained below. The occupant state determining unit 31 in the control unit 24 analyzes the captured image data obtained by the information collecting unit 30 and then determines the state of the occupant. For example, the occupant state determining unit 31 determines his or her state of consciousness, actions, posture, and the like. The actions of the occupant include, for example, his or her looking aside, watching a smartphone, holding a coffee cup, and so forth.

The occupant identifying unit 32 analyzes the captured image data obtained by the information collecting unit 30 and identifies occupants. The occupant identifying unit 32 stores data on features of occupants' faces available to identify the occupants, and hence, the occupant identifying unit 32 identifies the occupants on a seat basis, for example, based upon the similarity degree of the captured image data to the data on features. The data on features of occupants' faces may be saved in the information provision server 2, and in such a case, the occupant identifying unit 32 can obtain the data on features of occupants' faces from the information provision server 2.

The entered information storage unit 33 stores information (referred to as 'entered information' hereinafter) entered through an input operation on the input unit 22. The entered information includes notice reference information and the like. Such notice reference information includes information about an occupant or an occupant group available as the reference for decision making on notices.

The notice control unit 34 obtains information about the property of an occupant or an occupant group available as the reference for decision making on notices, based upon the notice reference information stored in the entered information storage unit 33. Fig. 5 is a diagram showing a notice reference table corresponding to an example of the notice reference information.

The notice reference table shown in Fig. 5 provides information having 'Number,' 'Notice Reference,' and 'Flag' correlated with one another, which are entered through operations on the input unit 22. The 'notice reference' is information about an occupant or an occupant group available as the reference for decision making on notices.

Any of the occupants in the vehicle A has a choice among a list of items of the 'notice reference' provided in the notice reference table, through an operation input on the input unit 22. The 'notice reference' thus chosen is given '1' as a corresponding flag.

When the notice reference table is as shown in Fig. 5, for example, the notice control unit 34 sets the driver of the vehicle A as an occupant available as the reference for decision making on notices, gives a request for the occupant property information of the driver to the information provision server 2 via the communication unit 23 and the information collecting unit 30, and obtains the occupant property information of the driver from the information provision server 2. The occupant identifying unit 32 identifies who is the driver and forwards the identification result to the notice control unit 34. In this way, once an occupant who is going to drive a car simply gets on the vehicle A, the occupant property information of the driver is obtained, and hence, botheration of operations such as an input operation can be avoided.

The database 12 of the information provision server 2 also contains information about an occupant whose manually controlled driving information is not sufficient to accumulate into an appropriate volume of the occupant property information. When a request for the occupant property information of such an occupant is given by the information provision device 3, the notice control unit 34 is prone to fail to perform notice control appropriately.

Thus, in case such a request for the occupant property information that has not been appropriately accumulated due to an insufficient amount of manually controlled driving information of the occupant is given by the information provision device 3, the occupant property determining unit 11 of the information provision server 2 obtains from the database 12 the occupant property information of any occupant group containing a property similar to that which has already been grasped regarding the occupant, and then transmits the obtained occupant property information to the information provision device 3. In this way, appropriate information provision services by the information provision system 1 can be established more promptly.

In case there is an occupant whose manually controlled driving information is insufficient to appropriately accumulate into a certain volume of information, the occupant property determining unit 11 may produce the occupant property information, in advance, based on occupant property information of another occupant or another occupant group having a property similar to that which has already been grasped regarding the occupant, regardless of whether or not a request is given from the information provision device 3.

If 'Occupant C' is related to the flag of '1' in the notice reference table shown in Fig. 5, the notice control unit 34 obtains the occupant property information of the occupant C from the information provision server 2, regardless of whether or not the occupant C currently rides in the vehicle A. In this way, even if the occupant C who has driven the vehicle A frequently is not a driver at present, the notice control over the control-at-notice information is carried out.

Hence, the remaining occupants in the vehicle A can preliminarily and appropriately grasp variations in behavior of the vehicle A when ways of driving at present are different from the usual ways by the occupant C. As has been recognized, the notice control can be carried out, based upon driving properties of a specified person among the occupants of the vehicle A in the past or at present. It is alternatively possible that the notice control unit 34 obtains the occupant property information of the occupant C in the event that the occupant C is an occupant of the vehicle A, and obtains the occupant property information of the driver in the event that the occupant C is not an occupant of the vehicle A.

If 'Occupants B to E' are related to the flag of '1' in the notice reference table shown in Fig. 5, the notice control unit 34 obtains the occupant property information of the occupants B to E from the information provision server 2. In such a situation, the notice control unit 34 compares driving properties of the occupants B to E with those by the automated driving, and based upon the comparison results, causes their respective notifying units 21₁ to 21₄ to notify those occupants of the control-at-notice information.

Although an example where an occupant available as the reference for decision making on notices is determined based on the notice reference table has been discussed, the notice control unit 34 may designate only an occupant currently occupying the driver's seat to such a reference available for decision making on notices. In such a case, the occupant identifying unit 32 identifies that occupant and forwards the identification result to the notice control unit 34, but it is also supposed that the occupant identifying unit 32 fails to identify the occupant.

To cope with such a situation, the notice control unit 34 may provide the effect that the person available as the reference for decision making on notices cannot be identified from the notifying units 21 to the occupants, and urge them to re-designate some other to the person available as the reference for decision making on notices. Based upon the information entered on the input unit 22, the notice control unit 34 obtains the occupant property information of the driver from the information provision server 2. An occupant or an occupant group available as the reference for decision making on notices is referred to as 'reference occupant' hereinafter.

Based upon the automated control information obtained from the automated driving control unit 48 and the occupant property information obtained from the information provision server 2, the notice control unit 34 compares the particulars of the automated control and the property of the reference occupant. From the comparison results, the notice control unit 34 determines if the notice control unit 34 notifies the occupants in the vehicle A of the control-at-notice information

When the 'location' and the 'scene' in the automated control information are, for example, 'freeway ramp' and 'separating/decelerating,' the notice control unit 34 compares the driving properties of the reference occupant corresponding to the 'freeway ramp' and the 'separating/decelerating' with the driving properties by the automated driving. The driving properties are, for example, the timing to start deceleration, a speed-down sensation accompanying the deceleration, and the like.

When the driving properties of the reference occupant is similar to those by the automated driving, the notice control unit 34 determines that the control-at-notice information is not passed. For instance, in the event that a degree of similarity between the driving properties of the reference occupant and those by the automated driving is equal to or more than a predetermined reference degree of similarity, the notice control unit 34 determines that the driving properties of the reference occupant and those by the automated driving are the same, and then, determines that the control-at-notice information is not passed. Such a degree of similarity becomes higher as the driving properties of the reference occupant are closer to those by the automated driving.

In this manner, upon separating from the traffic flow in a freeway ramp, the control-at-notice information is not passed when the driving properties by the automated driving are the same as the usual driving properties of the reference occupant, and hence, it can be avoided to annoy the occupants in the vehicle A.

Moreover, when the driving properties of the reference occupant are not the same as those by the automated driving, the notice control unit 34 determines that the control-at-notice information is passed. For example, when the degree of similarity between the driving properties of the reference occupant and those by the automated driving is less than the reference degree of similarity, the notice control unit 34 determines that both the driving properties are not the same, and then, determines that the control-at-notice information is passed. When it is determined that the control-at-notice information is passed, the notice control unit 34 further determines the notifying manner, the notifying timing, and the notifying destination, based upon the results of comparison of both the driving properties.

For instance, when a speed-down sensation accompanying the deceleration by the automated driving is stronger than that of the reference occupant, the notice control unit 34 determines that the notice is performed by sound output from the notifying unit 21 in place of screen display provided by the notifying unit 21 or along with the screen display. Furthermore, when a speed-down sensation accompanying the deceleration by the automated driving is stronger than that of the reference occupant, the notice control unit 34 may determine, in addition to the notifying unit 211 for the driver, the notifying units 21₂ to 21₄ for the remaining occupants as notifying destinations. This results in appropriately calling the attention of the occupants in the vehicle A.

When the separating speed by the automated driving is lower than that of the reference occupant, and resultantly, the separating timing by the automated driving is delayed in comparison with that by the driving operation of the reference occupant, the notice control unit 34 delays the timing to notify the occupants of the control-at-notice information (notice indicating that the vehicle separates from the traffic flow). It is possible to appropriately notify the occupants in the vehicle A of the separating timing.

In the event of notifying the occupants in the vehicle A of the control-at-notice information, the notice control unit 34 outputs the control-at-notice information to the notifying unit 21 determined as the notifying destination, in the notifying manner determined and at the notifying timing determined. Thus, the information provision system 1 can provide the control-at-notice information properly.

In case there are two or more of the reference occupants, the notice control unit 34 can determine presence or absence of notifying of the control-at-notice information, the notifying manner, and the notifying timing, for each of the reference occupants. For instance, the notice control unit 34 can perform the notice control of the information about the variations in behavior on the driver of the vehicle A based upon the property of the driver and also on the fellow occupants based upon the property of the fellow occupant(s). In such a manner, the control-at-notice information can be provided appropriately to each of the occupants.

Moreover, the notice control unit 34 may determine presence or absence of notifying, the notifying manner, the notifying timing, and the notifying destination, based upon the state of the occupants determined by the occupant state determining unit 31.

For example, in the event that any of the occupants is recognized as being in a condition of clouded consciousness such as of dozing off, the notice control unit 34 raises the reference degree of similarity on which it is determined whether or not the occupant is to be notified. In this manner, while warning him or her to get awake, the control-at-notice information can be given to the occupant.

Also, in case any of the occupants is looking aside, the notice control unit 34 determines that screen display provided by the notifying unit 21 is replaced with sound output from the notifying unit 21. In this way, the control-at-notice information can be appropriately provided to the occupant.

Furthermore, in case that any of the occupants holds a cup of coffee, the notice control unit 34, upon determining from the running route information obtained from the automated-driving control unit 48 that the vehicle A is coming closer to a curve or a sag ahead in the traffic lane where it travels, advances the notifying time of the control-at-notice information. Supposedly, coffee may be spilled over the cup that he or she holds while the vehicle A is running on such a curve or a sag, but notifying at an earlier timing to let the occupant learn that the vehicle is coming up against the sag before it happens can result in calling the attention of the occupant.

In case any of the occupants is watching a smartphone, the notice control unit 34 provides the control-at-notice information to his or her smartphone in addition to or instead of the notifying unit 21. The notice control unit 34 can send the information to the smartphone via the communication unit 23 and the communication network N, and alternatively, via a near field radio communication unit (not shown) loaded on the vehicle A.

In case any of the occupants feels sick, the notice control unit 34 can consistently notify the occupant of the control-at-notice information. In this way, the occupant feeling sick can be given advance notice of the behavioral variations of the vehicle A, so as to call his or her attention.

In this way, because presence or absence of notifying and the like can also be determined based upon the state of the occupant determined by the occupant state determining unit 31, the information provision system 1 can provide the information about the automated control appropriately.

The aforementioned manually controlled driving info output unit 49 obtains information about driving operations by the driver and outputs it to the information provision device 3. The notice control unit 34 obtains the information of the driving operations by the occupant from the manually controlled driving info output unit 49, and provides information about the manually controlled driving containing the obtained information to the information provision server 2. Such information about the manually controlled driving includes the information about the driver identified by the occupant identifying unit 32, the information about the running locations and running routes obtained from the automated driving control unit 48, and the like.

### 2.3. Processes by Information Provision System

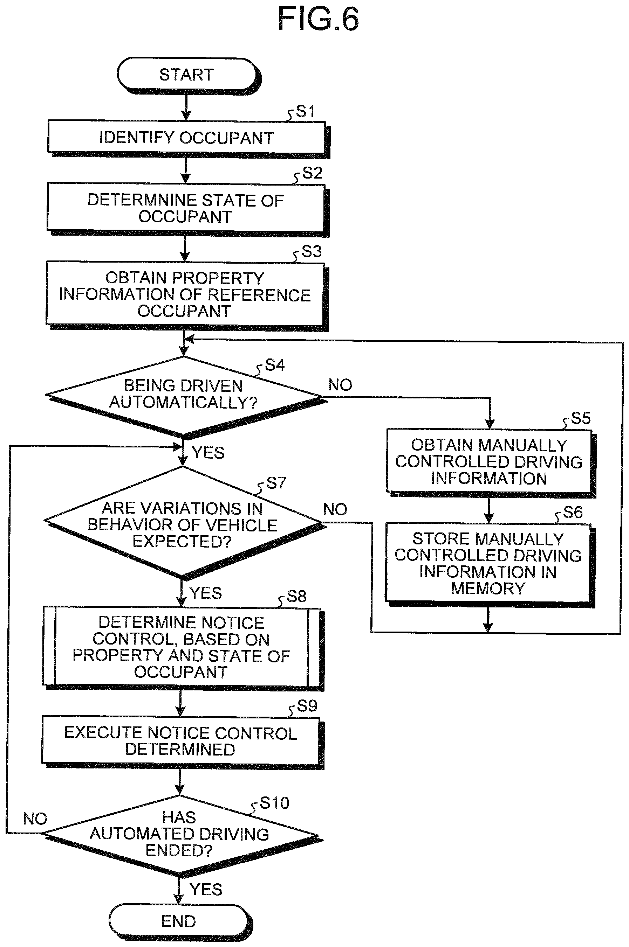

An example of a processing sequence by the information provision system 1 will now be described with a flowchart. Fig. 6 is the flowchart illustrating the sequence for a major process that is executed by the information provision system 1 repeatedly.

The control unit 24 of the information provision device 3, as shown in Fig. 6, identifies occupants in the vehicle A (Step S1), and also determines the states of the occupants (Step S2). These process steps are performed by the ways as respectively mentioned in the context of the occupant identifying unit 32 and the occupant state determining unit 31. Further, the control unit 24 of the information provision device 3 determines a reference occupant based upon the notice reference information, and gives to the information provision server 2 a request for occupant property information of the reference occupant. The information provision server 2 forwards the reference occupant property information stored in the database 12 to the information provision device 3. The control unit 24 of the information provision device 3 obtains the reference occupant property information forwarded from the information provision server 2 (Step S3).

Next, the control unit 24 of the information provision device 3 determines if the vehicle is being driven automatically (Step S4). The control unit 24 determines that the vehicle A is being driven automatically when the vehicle A is put under automated control by the automated-driving control unit 48.

Determining that the vehicle is being driven not automatically (Step S4; No), the control unit 24 obtains the manually controlled driving information (Step S5) and forwards it to the information provision server 2. The information provision server 2 stores in the database 12 the manually controlled driving information forwarded from the information provision device 3 (Step S6).

Otherwise, determining that the vehicle is being driven automatically (Step S4; Yes), the control unit 24 determines if variations in behavior of the vehicle A are expected (Step S7). In the course of such processing, the control unit 24 determines, based on the automated control information forwarded from the automated-driving control unit 48, if the variations in behavior of the vehicle A are expected.

Determining that the variations in behavior of the vehicle A are not expected (Step S7; No), the control unit 24 proceeds with the sequence to Step S4. Otherwise, determining that the variations in behavior of the vehicle A are expected (Step S7; Yes), the control unit 24 determines notice control based upon the property and/or the state of the occupant (Step S8), and then performs control based upon the events of the notice control as thus determined (Step S9). Such events of the notice control include information on whether or not to notify of the control-at-notice information such as the expected variations in behavior of the vehicle A, and further include, in case of notifying, the notifying manner, the notifying timing, and the notifying destination. Furthermore, the control unit 24 can determine if the variations in behavior of the vehicle A have been carried out immediately before in Step S7, and then determine the events of the notice control based upon the property and/or the state of the occupant.

Upon completing the processing in Step S9, the control unit 24 determines if the automated driving has ended (Step S10), and determining that it has not ended (Step S10; No), the control unit 24 proceeds with the sequence to Step S7. Otherwise, upon determining that it has ended (Step S10; Yes), the control unit 24 terminates the sequence shown in Fig. 6, and restarts it from Step S1.

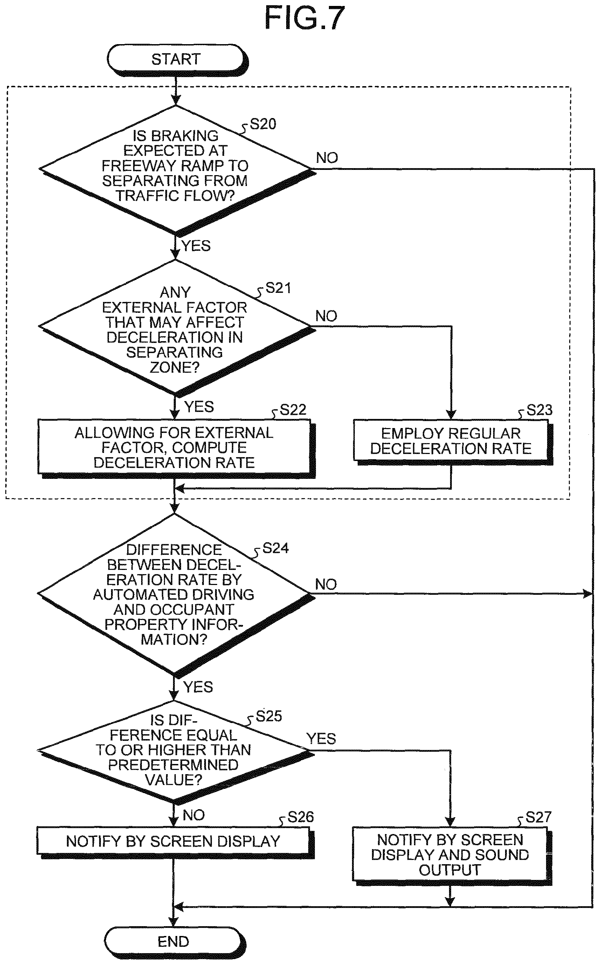

Fig. 7 is a diagram illustrating an example of the processing in Step S8 in the event that the location is 'freeway ramp' and the scene is the 'separating/decelerating.' For the sake of making the explanation easier to understand, Fig. 7 illustrates a sequence of the processing by the automated-driving control unit 48 on a stepwise basis from Steps S20 to S23, and an exemplary sequence of the processing in Step S8 from Steps S24 to S27.

The automated-driving control unit 48 determines if the braking under control of the braking control unit 43 is expected to separate from the traffic flow at the freeway ramp (Step S20). Upon determining that it is expected (Step S20; Yes), the automated-driving control unit 48 determines if there is any external factor that might affect the deceleration in the separating zone (Step S21). In the course of this processing, the automated-driving control unit 48 determines, for instance, that some external factor that could affect the deceleration exists when a vehicle ahead is cutting in the same lane, when a vehicle ahead is traveling slowly, and/or the like.

Upon determining that some external factor exists (Step S21; Yes), the automated-driving control unit 48 computes a rate of deceleration of the vehicle A, allowing for the external factor (Step S22), or otherwise, upon determining that no external factor exits (Step S21; No), the automated-driving control unit 48 sets a predetermined regular deceleration rate (Step S23). The automated-driving control unit 48 controls the braking by the braking control unit 43 based on the rate of deceleration computed or predetermined.

The control unit 24 of the information provision device 3 determines if the rate of deceleration computed or predetermined for the automated driving at Step S22 or S23 is different from that by the reference occupant (Step S24). In the course of the processing, the control unit 24 extracts information about the rate of deceleration to separate from the traffic flow in the freeway ramp from the reference occupant property information obtained in Step S3, and compares it with the rate of deceleration by the automated driving.

Upon determining that the rate of deceleration by the automated driving is different from that by the reference occupant (Step S24; Yes), the control unit 24 determines if the difference of the deceleration rate by the automated driving from that by the reference occupant is equal to or higher than a predetermined value (Step S25). In the course of the processing, for example, the control unit 24 can determine whether or not the difference between the rates of deceleration by the automated driving and by the reference occupant is equal to or higher than the predetermined value based upon differential levels graded according to the difference between the rates of deceleration. Specifically, the control unit 24 determines, from the differential levels thus graded, the one corresponding to the difference determined in Step S24 between the rates of deceleration by the automated driving and the driving by the reference occupant. When the determined differential level is equal to or higher than the reference differential level, the control unit 24 determines that the difference between the rates of deceleration by the automated driving and by the reference occupant is equal to or higher than the predetermined value. Although, in the processing illustrated in Fig. 7, the differential level is computed, the control unit 24 may determine the degree of similarity, as has been already mentioned, according to the difference between the rates of deceleration by the automated driving and by the reference occupant. In this way, the control unit 24 is capable of determining any of the degree of similarity and the differential level. As the degree of similarity becomes higher, the differential level is lower, and as the degree of similarity becomes lower, the differential level is higher. Hence, when the degree of similarity is less than the reference degree of similarity, the control unit 24 may determine that the difference between the rates of deceleration by the automated driving and by the reference occupant is equal to or higher than the predetermined value.

In Step S25, when the difference is not equal to or higher than the predetermined value (Step S25; No), the control unit 24 notifies of the information indicating variations in behavior of the vehicle A by means of screen display on the notifying unit 21 (Step S26). Otherwise, in the event that the difference is equal to or higher than the predetermined value (Step S25; Yes), the control unit 24 notifies of the information indicating the variations in behavior of the vehicle A by means of sound output from the notifying unit 21 in addition to the screen display on the same (Step S27).

In Step S24, upon determining that the rate of deceleration by the automated driving is not different from that by the reference occupant (Step S24; No), the control unit 24 ends the processing in Step S8 without notifying of the information indicating the variations in behavior of the vehicle A. Also, when the processing in either of Steps S26 and S27 is completed, the control unit 24 ends the sequence in Step S8 in the same manner.

Although, as to the example illustrated in Fig. 7, it has been discussed so far that the processing in each of Steps S20 to S23 is performed by the automated-driving control unit 48, the control unit 24 of the information provision device 3 may be provided with a vehicle behavior estimating unit that estimates behavior of the vehicle A, so that the vehicle behavior estimating unit performs the processing in Steps S20 to S23 and the like.

### 4. Other Alternatives

Although the aforementioned in the context of the information provision system 1 sets forth the examples in which the information provision device 3 loaded on the vehicle A obtains the occupant property information from the information provision server 2, the information provision device 3 may be provided with the database 12. In this manner, the information provision device 3, even if disabled from communication with the information provision server 2, can achieve the notice control appropriately. In such a case, because the database 12 stores only the information about the driver of the vehicle A, the storage capacity of the database 12 can be saved. The information provision device 3 may be provided with the occupant property determining unit 11 in addition to the database 12.

In addition, some functional part of the information provision device 3 may be provided in the information provision server 2. In this manner, the burden on the vehicle A can be reduced. For example, providing the control unit 24 in the information provision server 2 but not in the information provision device 3 can result in the reduced manufacturing cost for the information provision device 3 loaded on the vehicle A.

In the aforementioned embodiment, the information containing the 'locations', the 'scenes', and the 'driving properties' correlated with one another has been set forth as an example of the occupant property information, and additionally, one or more of the physical condition of the occupants, the weather, the number of the fellow occupants, and the time zone of the day may be related to the 'driving properties'. In this manner, even if driving properties are different according to the physical condition of the occupants, the weather, the number of the fellow occupants, and the time zone of the day, the occupants can be appropriately notified of the information about the automated control.

In the aforementioned embodiment, the example where the information provision device 3 obtains the information about the running locations and scenes from the automated-driving control unit 48 has been described, and alternatively, the information provision device 3 may be provided with a determination unit that determines the running location and scene.

As has been described, the information provision system, the information provision device, and the information provision method according to the present embodiment are advantageous on any occasion when occupants of a vehicle are informed appropriately during automated driving or any similar style of driving, and especially, they are suitable for providing information for the occupants who want to spend their time comfortably during the automated driving and any similar style of the driving.

## Claims

1. An information provision method of providing information about automated control to an occupant of a vehicle (A) of which at least part of driving operation is automatically controlled, the information provision method being **characterized by** comprising:
obtaining, from a database (12) storing information about a driving property of the occupant, information about the driving property of the occupant of the vehicle (A); and
comparing the driving property of the occupant obtained in the obtaining with particulars of the automated control over the vehicle (A), and notifying the occupant of the vehicle (A) of the information about the automated control on the basis of the comparison results.

2. The information provision method according to claim 1, wherein the obtaining includes further obtaining information about a state of the occupant of the vehicle (A), and the notifying further includes notifying the occupant on the basis of the information obtained in the obtaining.

3. The information provision method according to claim 1 or 2, wherein the notifying includes changing control over notifying the occupant of the vehicle (A) of the information about the automated control on the basis of the information obtained in the obtaining.

4. The information provision method according to any one of claims 1 to 3, wherein the notifying includes determining at least one of presence or absence of notifying, a notifying manner, a notifying time, and a notifying means (21₁ to 214) of the information about the automated control on the basis of the information obtained in the obtaining.

5. The information provision method according to any one of claims 1 to 4, wherein the notifying includes notifying the occupant of the information about the automated control on the basis of the driving property of an occupant excepting a driver among a plurality of the occupants of the vehicle (A).

6. The information provision method according to any one claims 1 to 5, wherein the notifying includes notifying the occupant of the information about the automated control on the basis of the driving property of a specific occupant among the past and current occupants of the vehicle (A).

7. The information provision method according to any one of claims 1 to 6, wherein
the notifying includes:
grouping as a group a plurality of drivers, at least parts of the driving properties of the plurality of drivers being similar to each other and;
notifying the occupant of the information about the automated control on the basis of the driving property of a group to which the occupant of the vehicle (A) belongs.

8. The information provision method according to any one of claims 1 to 7, wherein the notifying includes notifying the driver of the vehicle (A) of the information about the automated control on the basis of at least one of the property and the state of the driver, and notifying a fellow occupant of the vehicle (A) on the basis of at least one of the property and the state of the fellow occupant.

9. The information provision method according to any one of claims 1 to 8, wherein the notifying includes notifying the occupant of, when the automated control causes variations in behavior of the vehicle (A), information about the variations in behavior as the information about the automated control.

10. An information provision device (3) that provides information about automated control to an occupant of a vehicle (A) of which at least part of driving operation is automatically controlled, the information provision device (3) being **characterized by** comprising:
a communication unit (23) that obtains, from a database (12) storing information about a driving property of the occupant, information about the driving property of the occupant of the vehicle (A); and
a notice control unit (34) that compares the obtained driving property of the occupant with particulars of the automated control over the vehicle (A), and informs the occupant of the information about the automated control via a notifying means (21₁ to 21₄) on the basis of the comparison results.

11. A vehicle (A) of which at least part of driving operation is automatically controlled, the vehicle (A) comprising an information provision device (3) according to claim 10.

## Patentansprüche

1. Informationsbereitstellungsverfahren zum Bereitstellen von Informationen über eine automatisierte Steuerung an einen Insassen eines Fahrzeugs (A), bei dem zumindest ein Teil des Fahrbetriebs automatisch gesteuert wird, wobei das Informationsbereitstellungsverfahren **dadurch gekennzeichnet ist, dass** es umfasst:
Erhalten, aus einer Datenbank (12), welche Informationen über eine Fahreigenschaft des Insassen speichert, von Informationen über die Fahreigenschaft des Insassen des Fahrzeugs (A); und
Vergleichen der Fahreigenschaft des Insassen, die bei dem Erhalten erhalten wird, mit Angaben der automatisierten Steuerung des Fahrzeugs (A), und Unterrichten des Insassen über die Informationen über die automatisierte Steuerung des Fahrzeugs (A) basierend auf die Vergleichsergebnisse.

2. Informationsbereitstellungsverfahren nach Anspruch 1, wobei das Erhalten ferner Erhalten von Informationen über einen Zustand des Insassen des Fahrzeugs (A) aufweist und das Unterrichten ferner Unterrichten des Insassen basierend auf den bei dem Erhalten erhaltenen Informationen aufweist.

3. Informationsbereitstellungsverfahren nach Anspruch 1 oder 2, wobei das Unterrichten Ändern einer Steuerung des Unterrichtens des Insassen des Fahrzeugs (A) über die Informationen über die automatisierte Steuerung basierend auf den bei dem Erhalten erhaltenen Informationen aufweist.

4. Informationsbereitstellungsverfahren nach einem der Ansprüche 1 bis 3, wobei das Unterrichten Bestimmen mindestens eines von einem Vorhandensein oder Fehlen eines Unterrichtens, einer Unterrichtungsart, einer Unterrichtungszeit und/oder einem Unterrichtungsmittel (21₁ bis 21₄) über die Informationen über die automatisierte Steuerung basierend auf den bei dem Erhalten erhaltenen Informationen aufweist.

5. Informationsbereitstellungsverfahren nach einem der Ansprüche 1 bis 4, wobei das Unterrichten ein Unterrichten des Insassen über die Informationen über die automatisierte Steuerung basierend auf der Fahreigenschaft eines Insassen mit Ausnahme eines Fahrers unter mehreren Insassen des Fahrzeugs (A) aufweist.

6. Informationsbereitstellungsverfahren nach einem der Ansprüche 1 bis 5, wobei das Unterrichten ein Unterrichten des Insassen über die Informationen über die automatisierte Steuerung basierend auf der Fahreigenschaft eines bestimmten Insassen unter den früheren und aktuellen Insassen des Fahrzeugs (A) aufweist.

7. Informationsbereitstellungsverfahren nach einem der Ansprüche 1 bis 6, wobei das Unterrichten aufweist:
Gruppieren von mehreren Fahrern als Gruppe, wobei zumindest Teile der Fahreigenschaften der mehreren Fahrern zueinander ähnlich sind;
Unterrichten des Insassen über die Informationen über die automatisierte Steuerung basierend auf der Fahreigenschaft einer Gruppe, zu der der Insasse des Fahrzeugs (A) gehört.

8. Informationsbereitstellungsverfahren nach einem der Ansprüche 1 bis 7, wobei das Unterrichten ein Unterrichten des Fahrers des Fahrzeugs (A) über die Informationen über die automatisierte Steuerung basierend auf mindestens eines von der Eigenschaft und dem Zustand des Fahrers, und Unterrichten eines Mitinsassen des Fahrzeugs (A) basierend auf der Eigenschaft und/oder dem Zustand des Mitinsassen aufweist.

9. Informationsbereitstellungsverfahren nach einem der Ansprüche 1 bis 8, wobei das Unterrichten ein Unterrichten des Insassen über, wenn die automatisierte Steuerung Variationen im Verhalten des Fahrzeugs (A) verursacht, Informationen über die Variationen im Verhalten als die Informationen über die automatisierte Steuerung aufweist.

10. Informationsbereitstellungsvorrichtung (3), die Informationen über eine automatisierte Steuerung an einen Insassen eines Fahrzeugs (A) bereitstellt, bei dem zumindest ein Teil des Fahrbetriebs automatisch gesteuert wird, wobei die Informationsbereitstellungsvorrichtung **dadurch gekennzeichnet ist, dass** sie umfasst:
eine Kommunikationseinheit (23), die aus einer Datenbank (12), welche Informationen über eine Fahreigenschaft des Insassen speichert, Informationen über die Fahreigenschaft des Insassen des Fahrzeugs (A) erhält; und
eine Unterrichtungssteuerungseinheit (34), die die erhaltene Fahreigenschaft des Insassen mit Details der automatisierten Steuerung des Fahrzeugs (A) vergleicht, und den Insassen über ein Unterrichtungsmittel (21₁ bis 21₄) über die Informationen über die automatisierte Steuerung basierend auf den Vergleichsergebnissen informiert.

11. Fahrzeug (A), bei dem zumindest ein Teil des Fahrbetriebs automatisch gesteuert wird, wobei das Fahrzeug (A) eine Informationsbereitstellungsvorrichtung (3) nach Anspruch 10 umfasst.

## Revendications

1. Procédé de fourniture d'informations pour fournir des informations concernant une commande automatisée à un occupant d'un véhicule (A), dont au moins une partie de l'opération de conduite est automatiquement commandée, le procédé de fourniture d'informations étant **caractérisé en ce qu'**il comprend les étapes ci-dessous consistant à :
obtenir, à partir d'une base de données (12) stockant des informations concernant une propriété de conduite de l'occupant, des informations concernant la propriété de conduite de l'occupant du véhicule (A) ; et
comparer la propriété de conduite de l'occupant, obtenue à l'étape d'obtention, à des détails de la commande automatisée sur le véhicule (A), et notifier, à l'occupant du véhicule (A), les informations concernant la commande automatisée, sur la base des résultats de comparaison.

2. Procédé de fourniture d'informations selon la revendication 1, dans lequel l'étape d'obtention consiste en outre à obtenir des informations concernant un état de l'occupant du véhicule (A), et dans lequel l'étape de notification consiste en outre à notifier l'occupant, sur la base des informations obtenues à l'étape d'obtention.

3. Procédé de fourniture d'informations selon la revendication 1 ou 2, dans lequel l'étape de notification inclut l'étape consistant à changer de commande suite à la notification, à l'occupant du véhicule (A), des informations concernant la commande automatisée, sur la base des informations obtenues à l'étape d'obtention.

4. Procédé de fourniture d'informations selon l'une quelconque des revendications 1 à 3, dans lequel l'étape de notification inclut l'étape consistant à déterminer au moins un élément parmi une présence ou une absence de notification, un mode de notification, une heure de notification, et un moyen de notification (21₁ à 21₄) des informations concernant la commande automatisée, sur la base des informations obtenues à l'étape d'obtention.

5. Procédé de fourniture d'informations selon l'une quelconque des revendications 1 à 4, dans lequel l'étape de notification consiste à notifier, à l'occupant, des informations concernant la commande automatisée, sur la base de la propriété de conduite d'un occupant, à l'exception d'un conducteur parmi une pluralité des occupants du véhicule (A).

6. Procédé de fourniture d'informations selon l'une quelconque des revendications 1 à 5, dans lequel l'étape de notification consiste à notifier, à l'occupant, des informations concernant la commande automatisée, sur la base de la propriété de conduite d'un occupant spécifique parmi les occupants antérieurs et actuels du véhicule (A).

7. Procédé de fourniture d'informations selon l'une quelconque des revendications 1 à 6, dans lequel
l'étape de notification inclut les étapes ci-dessous consistant à :
regrouper, sous la forme d'un groupe, une pluralité de conducteurs, dans lequel au moins des parties des propriétés de conduite de la pluralité de conducteurs sont mutuellement similaires ; et
notifier, à l'occupant, des informations concernant la commande automatisée, sur la base de la propriété de conduite d'un groupe auquel appartient l'occupant du véhicule (A).

8. Procédé de fourniture d'informations selon l'une quelconque des revendications 1 à 7, dans lequel l'étape de notification consiste à notifier, au conducteur du véhicule (A), des informations concernant la commande automatisée, sur la base d'au moins un élément parmi la propriété et l'état du conducteur, et à notifier un collègue occupant du véhicule (A), sur la base d'au moins l'un des éléments parmi la propriété et l'état du collègue occupant.

9. Procédé de fourniture d'informations selon l'une quelconque des revendications 1 à 8, dans lequel l'étape de notification consiste à notifier, à l'occupant, lorsque la commande automatisée occasionne des variations comportementales du véhicule (A), des informations concernant les variations comportementales, en tant que les informations concernant la commande automatisée.

10. Dispositif de fourniture d'informations (3) qui fournit des informations concernant une commande automatisée à un occupant d'un véhicule (A), dont au moins une partie de l'opération de conduite est automatiquement commandée, le dispositif de fourniture d'informations (3) étant **caractérisé en ce qu'**il comprend :
une unité de communication (23) qui obtient, à partir d'une base de données (12) stockant des informations concernant une propriété de conduite de l'occupant, des informations concernant la propriété de conduite de l'occupant du véhicule (A) ; et
une unité de commande de notification (34) qui compare la propriété de conduite obtenue de l'occupant à des détails de la commande automatisée sur le véhicule (A), et qui notifie, à l'occupant, les informations concernant la commande automatisée, par l'intermédiaire d'un moyen de notification (21₁ à 21₄), sur la base des résultats de comparaison.

11. Véhicule (A) dont au moins une partie d'une opération de conduite est commandée automatiquement, le véhicule (A) comprenant un dispositif de fourniture d'informations (3) selon la revendication 10.
